# EUROPEAN PATENT SPECIFICATION

(11) **EP 1 264 953 B1**
(45) Date of publication and mention of the grant of the patent: **07.11.2007**
(21) Application number: 02380107.9
(22) Date of filing: 24.05.2002
(51) Int. Cl.: G11B 23/00, E05B 73/00

(54) **Method of manufacturing a security box**
Verfahren zum Herstellen einen Sicherheitsbehälter
Procédé pour la fabrication d'une boîte de sécurité

(30) Priority: 04.06.2001 ES 200101447
(43) Date of publication of application: 11.12.2002
(73) Proprietor: Mehr, S.L., 28950 Moraleja de Enmedio (Madrid) (ES)
(72) Inventor: Moreno, Luis Martin, 28950 Moraleja de en Medio (Madrid) (ES)
(74) Representative: Esteban Perez-Serrano, Maria Isabel

(56) References cited:
- EP-A- 0 458 721
- WO-A-99/22102
- US-A- 4 221 025
- US-A- 4 590 461
- US-A- 6 084 498

## Description

### OBJECT OF THE INVENTION

The invention disclosed herein relates to a method of manufacturing a security box, from among the various magnetic protection means for preventing theft of cassette tapes, compact discs, DVD's, videotapes, etc., comprised of a body having a projecting pin that inserts in an antagonistic orifice of a button with a magnetic core that is housed in the lid.

This invention is characterised by a special construction of the closure which does not require a manual, piece-by-piece insertion of the point in the body mold, by means of providing the body with a recess in which said point is inserted after the molding operation, by mechanical methods or otherwise, while the lid protector is provided with an improved presser for the closure spheres.

### BACKGROUND OF THE INVENTION

The Applicant holds model No. 2130070, for a "Magnetic security closure for boxes" in which a ferromagnetic pin is partially inserted in an internally recessed ring that houses the head of the pin, and whose base is opposite a helical spring that holds the pin head against the base of the recess of the ring and is in turn held by the bottom of a cap secured by tabs in a front projection of the box, antagonistic of the projection of the lid, with the cylindrical pin sliding along the inclined plane of an opposing surface as far as the antagonistic orifice, so that between said part or pin and the orifice is configured the closure of a lid on its corresponding box.

It also holds patent no. 1027366 for a "Magnetic security closure for boxes" in which a pin made of a ferromagnetic material is inserted as far as its head in an internally grooved ring, with a small recess of said head housing a spring that holds said head against the ring groove and that is inserted in the recess of a cap, which can house the spring and the pin head and that is engaged in the inner lip of the bushing by its own lip, while tabs are used to lock the bushing in a front lip of the box body.

There exist other documents that associate two parts, a box and a lid, with a prismatic rectangular shape and with the lid having a projecting button inside which is housed the opposite end of a sharp point that projects out of the front of the body of the protector, with this point being embedded in said protector, as is the case of models nos. 1013388 U, 1013688 U and 1020976 U. These are all costly to manufacture, as they require the manual introduction of the point in the mold that will become the front layer, then remaining inserted in it and thus providing a flat configuration of both greater faces.

Lastly, it should be pointed out that regardless of the functional efficiency of almost all protection closures in the market, inside their cap is provided a bushing that houses the spring in charge of pushing the closure spheres against another bushing, placed beneath and inserted in the cap.

This arrangement of the first bushing that internally houses the pressure spring requires a small diameter helical spring to be used, and thus allows sideways oscillations when inserting or removing the closure pin, resulting in accidental jamming that in addition reduce the useful life of the mechanisms and thereby of the security box.

Document EP 0 458 721 describes a security box for preventing theft of cassettes and the like comprising a body and a lid and having a pin locking.

### DESCRIPTION OF THE INVENTION

The invention object of the present memory relates to method of manufacturing a security box, from among the various magnetic protection means to prevent theft from the shelves of large department stores of cassette tapes, compact discs, DVD's or video tapes and any other objects which, due to their small size and high price, are prone to this circumstance.

It belongs to the security closures having a body with a projecting sharp pin, preferably of the type constructed as a box with a lid, with both of these having a prismatic rectangular shape and in which the aforementioned pin is part of the body of the box and is meant to be inserted in an antagonistic orifice of a button with a magnetic core that is housed in a frontal bushing projecting from the lid, in an operation performed after molding the lid.

The invention does not follow the current construction method, which consists of a manual and piece-by piece insertion of the pin in the mold of the body, then proceeding to manufacture the body, this being achieved by first molding the body and providing it on its front face with a recess antagonistic of the pin head, such as of the grease ball type, in which recess is inserted the pinhead after molding, by mechanical procedures or otherwise.

It is thus also a more ecologically sound product, as poorly molded parts can be recovered as they do not have a pin inserted in the mold.

In addition, the lid protector is provided, inserted in the cap, with a presser for the closure spheres, based on a part with an axial orifice bevelled on the bottom and peripherally recessed on the top, in order to receive the helical spring that inserts in the support bushing for the chromed spheres in the closing operation.

The method of the invention is defined in claim 1.

### DESCRIPTION OF THE DRAWINGS

The present descriptive memory is accompanied by a set of drawings meant to illustrate the preferred embodiment and in a non-limiting sense.

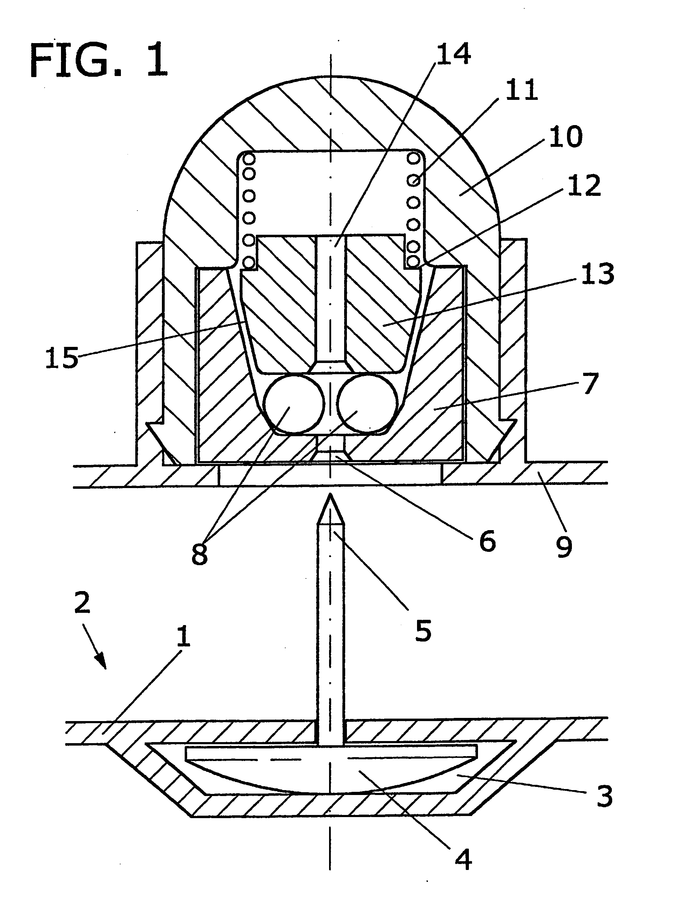

Figure 1 shows an enlarged view of the central area of the lid and the central front area of the body, in an exploded and cross-sectional view, revealing the characteristics of a security box manufactured according to the invention.

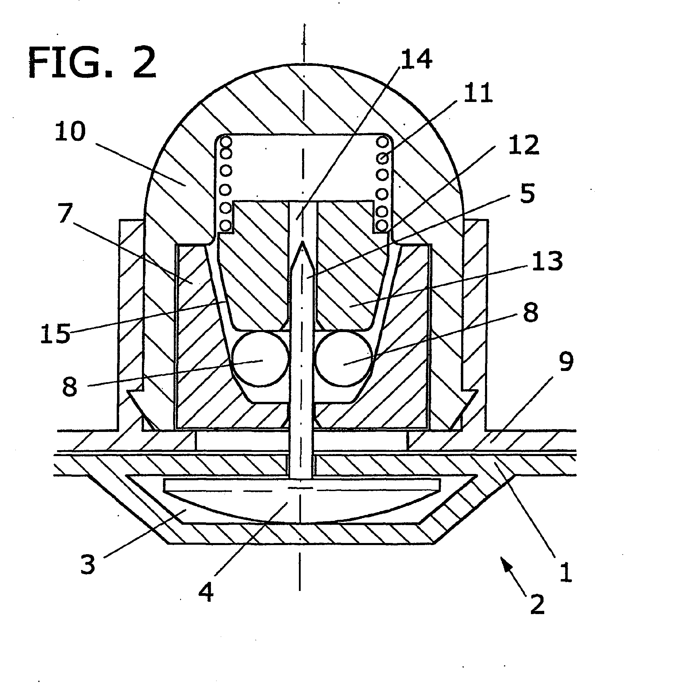

Figure 2 is a cross-sectional view of the assembly of the lid and the box of the security box of Figure 1 in its closed position.

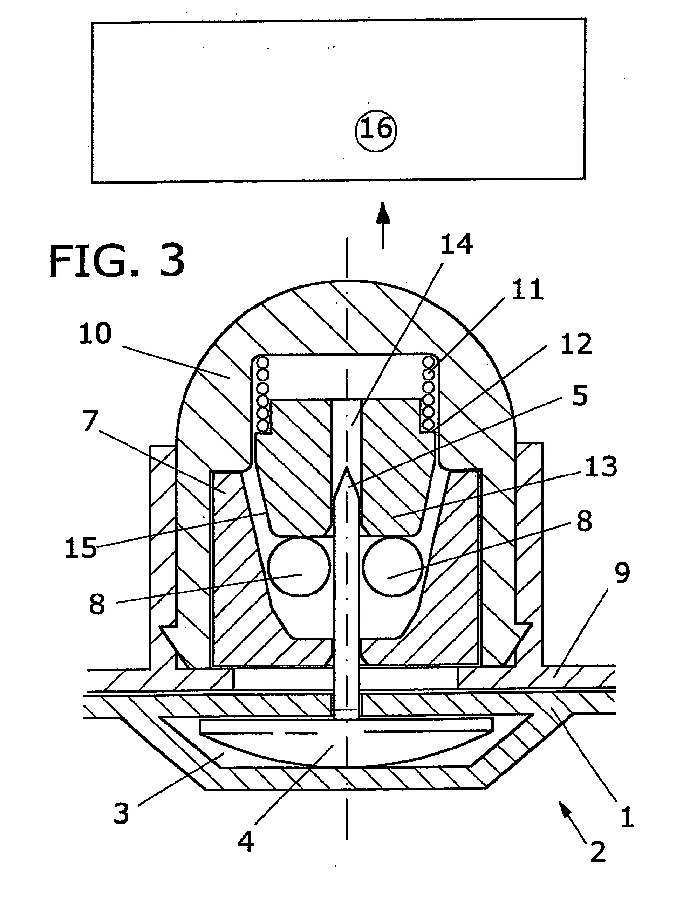

Figure 3 shows the same box at the time of removal of the lid.

### PREFERRED EMBODIMENT OF THE INVENTION

In view of the above, the present description relates to a closure for security boxes from among magnetic theft-protection devices for cassette tapes and the like, provided with a body having a pin that inserts in an antagonistic orifice with a magnetic core, housed in the lid, characterised in that the front (1) of the body (2) is provided with a recess (3) configured in accordance with the shape of the head (4) that is housed in said recess (3), with the point (5) of said head being antagonistic of the orifice (6) of the bushing (7) supporting the closure spheres (8) of the lid (9).

Finally, the cap (10) presses the spring (11) against the peripheral lip (12) of the solid presser body (13) of the spheres (8), having an axial orifice (14) and a lower bevelling (15), in order to allow a gradual insertion in the bushing (7) from which it can only be separated by the attraction of the magnetic element (16).

## Claims

1. Method of manufacturing a security box constructed as a body (2) and a lid having a closure from among magnetic protection devices for preventing theft of cassettes tapes, compact discs, DVD's videos and the like and in which a pin is part of the body (2) of the box and is meant to be inserted in an antagonistic orifice of a button with a magnetic core that is housed in a frontal bushing projecting from the lid, wherein said button is inserted in said frontal bushing in an operation performed after moulding the lid, and in which the front (1) of the body (2) is provided with a recess (3) configured in accordance with the shape of the head (4) of the pin, which head (4) of the pin is housed in said recess (3) after the body has been moulded, wherein said button with a magnetic core comprises a cap (10), a bushing (7), a solid presser body (13), a spring (11) and closure spheres (8), wherein the cap (10) presses the spring (11) against the peripheral lip (12) of the solid presser body (13) for pressing the closure spheres (8), which presser body (13) is provided with an axial orifice (14) and a lower bevelling (15) in order to allow a gradual insertion in the bushing (7).

## Patentansprüche

1. Verfahren zur Herstellung einer Sicherheitsbox, die als ein Gehäuse (2) und ein Deckel konstruiert ist und die über einen Verschluss verfügt, unter den magnetischen Schutzvorrichtungen zur Vermeidung des Diebstahls von Magnetbandkassetten, CDs, DVDs, Videos und Ähnlichem, und in der ein Bolzen Teil des Gehäuses (2) der Box ist und dazu bestimmt ist, in eine entgegenwirkende Öffnung eines Knopfes mit einem Magnetkern eingeführt zu werden, der in einer stirnseitigen Buchse untergebracht ist, die von dem Deckel herausragt, bei der der besagte Knopf in der besagten Buchse bei einem Arbeitsgang eingeführt wird, der nach dem Pressen des Deckels erfolgt, und wobei die Stirnseite (1) des Gehäuses (2) mit einer Einbuchtung (3) ausgestattet ist, die in Übereinstimmung mit der Form des Kopfes (4) des Bolzens konfiguriert ist, wobei der Kopf (4) des Bolzens (3) in der besagten Einbuchtung (3) untergebracht wird, nachdem das Gehäuse gepresst wurde, bei der der besagte Knopf mit einem Magnetkern eine Kappe (10), eine Buchse (7), einen massiven Presskörper (13), eine Feder (11) und Verschlusskugeln (8) umfasst, bei der die Kappe (10) die Feder (11) gegen den peripheren Rand (12) des massiven Presskörpers (13) zum Pressen der Verschlusskugeln (8) drückt, wobei der Presskörper (13) mit einer axialen Öffnung (14) und einer unteren Abschrägung (15) ausgestattet ist, um eine allmähliche Einfügung in die Buchse (7) zu ermöglichen.

## Revendications

1. Méthode de fabrication d'une boîte de sécurité construite sous la forme d'un corps (2) et d'un couvercle pourvu d'une fermeture comme celle des dispositifs de protection magnétique pour éviter le vol de cassettes audio et vidéo, disques compacts, DVD et autres, et dans laquelle un clou fait partie du corps (2) de la boîte et est conçu pour s'introduire dans un orifice antagonique percé dans un bouton doté d'un noyau magnétique, ce bouton se trouvant logé dans un manchon frontal dépassant du couvercle, où ledit bouton est introduit dans ledit manchon frontal par une opération réalisée après le moulage du couvercle, et où la partie frontale (1) du corps (2) comporte un espace vide (3) conformé d'après la forme de la tête (4) du clou, cette tête (4) du clou étant logée dans ledit espace (3) après le moulage du corps, où ledit bouton à noyau magnétique comporte un capuchon (10), un manchon (7), un corps presseur (13) massif, un ressort (11) et des sphères de fermeture (8), où le capuchon (10) comprime le ressort (11) contre le bord périphérique (12) du corps presseur (13) massif pour comprimer les sphères de fermeture (8), le corps presseur (13) a un orifice axial (14) et un biseautage inférieur (15) afin de permettre une introduction graduelle dans le manchon (7).
